# EUROPÄISCHE PATENTSCHRIFT

(11) **EP 0 639 862 B1**
(45) Veröffentlichungstag und Bekanntmachung des Hinweises auf die Patenterteilung: **18.09.1996**
(21) Anmeldenummer: 94108058.2
(22) Anmeldetag: 26.05.1994
(51) Int. Cl.: H01M 2/12, H01M 10/48

(54) **Mehrzellige Batterie**
Storage battery having a plurality of cells and a central degassing system integrated in the battery cover
Batterie multicellulaire à conduite de dégazage central intégrée dans le couvercle de la batterie

(30) Priorität: 17.08.1993 DE 9312250 U
(43) Veröffentlichungstag der Anmeldung: 22.02.1995
(73) Patentinhaber: VB Autobatterie GmbH, D-30419 Hannover (DE)
(72) Erfinder: Böhle, Christian, Dr., D-30823 Garbsen (DE); Eisenacher, Werner, D-31171 Nordstemmen (DE); Gummelt, Klaus, D-30823 Garbsen (DE)
(74) Vertreter: Kaiser, Dieter Ralf, Dipl.-Ing.

(56) Entgegenhaltungen:
- EP-A- 0 178 422
- EP-A- 0 305 822
- EP-A- 0 355 461
- EP-A- 0 514 918
- EP-A- 0 523 273
- DE-U- 9 312 250

## Beschreibung

Die Erfindung betrifft eine mehrzellige Batterie mit in den Batteriedeckel integrierter Zentralentgasung und dieser nachgeordneter poröser Fritte als Explosionsschutz.

Typische Batterien dieser Gattung sind Blei-Säure-Akkumulatoren zum Starten von Kraftfahrzeugen. Ihr Gehäuse besteht aus einem im Spritzverfahren hergestellten rechteckigen Kunststoffbehälter, dem sogenannten Blockkasten, und einem Deckel aus dem gleichen Kunststoffmaterial, welcher mit dem Blockkasten, nachdem die Plattenpakete in diesen eingebaut sind, spiegelverschweißt wird.

Der meist haubenförmig gestaltete Batteriedeckel ist durch eine der Zellenzahl entsprechende Anzahl von Zwischenwänden unterteilt, welche die Zellentrennwände des Blockkastens bis zur vollen Bauhöhe der Batterie ergänzen.

Der Deckel besitzt ferner mit Blindstopfen verschließbare Einfüllöffnungen für jede Zelle, wobei die Einfüllöffnungen umgebende Rohrstutzen von oben bis in die Gasräume der Zellen heineinragen.

Es ist längst üblich, die während des Betriebes mit Stopfen dicht verschlossenen Zellen von den Ladegasen zentral zu entsorgen, indem man sie an eine gemeinsame Gassammelleitung, die sich im Deckelbereich befindet, anschließt und die Mündung des Sammelkanals nach draußen an eine Seitenwand des Deckels verlegt, wo der Gasaustritt leicht unter Kontrolle gehalten werden kann.

Eine typische Zentralentgasung ist in der DE-OS 34 44 011 beschrieben. Wie dort ersichtlich, kommunizieren die Zellen einer Batterie über einen gemeinsamen Gaskanal, der sich in Linie mit den Verschlußstopfen befindet. Die Verschlußstopfen sind als Hohlstopfen ausgebildet und besitzen Entgasungsöffnungen in ihren zylindrischen Wänden, durch welche der Gaskanal für jede Zelle zugänglich wird. Die Ausmündungen des Gaskanals an gegenüberliegenden Seiten des Batteriedeckels können mit einem Tropfenfänger-Stopfen oder einem rückzündungshemmenden porösen Keramik- oder Kunststoffkörper abgeschlossen sein.

Bei allen bekannten zentralen Entgasungssystemen stellt sich vor allem das Problem einer wirksamen Zurückhaltung des vom Gasstrom mitgetragenen Säurenebels. Dabei besteht u.a. die Gefahr, daß sich die für den Explosionsschutz eingesetzten Frittenkörper durch ausgeschiedenes Flüssigkondensat verstopfen, so daß es zu einer gefährlichen Erhöhung des Innendrucks in der Batterie kommen kann.

Gemäß DE-PS 37 29 610 wird dem Dichtsetzen des Flammschutzfilters dadurch vorgebeugt, daß dieses im Gaskanal senkrecht zur Elektrolytoberfläche orientiert ist und dabei in zur Elektrolytoberfläche paralleler Richtung durchströmt wird mit dem Erfolg, daß ein Feuchtigkeitsniederschlag aus dem Durchströmungsbereich in den abwärts sich erstreckenden Teil des porösen Körpers ausweichen kann.

Aus dem deutschen Gebrauchsmuster G 88 12 468 ist es auch bekannt, mindestens eine Öffnung eines gemeinsamen Gaskanals mit einem steckbaren Teil zu versehen, welches seinerseits zur Aufnahme einer Flammschutzfritte oder eines Schlauchabganges dient.

Schließlich offenbart das deutsche Gebrauchsmuster G 90 15 535 eine sacklochartig erweiterte Ausmündung des gemeinsamen Gaskanals aus dem Deckel, die den Einsatz einer Explosionsschutzfritte mit größerem Durchtrittsquerschnitt erlaubt. Eine solche Anordnung ist zur Bewältigung eines vergleichsweise großen Gasvolumenstromes geeignet.

Der vorliegenden Erfindung liegt die Aufgabe zugrunde, eine Batterie nach dem eingangs angegebenen Gattungsbegriff verfügbar zu machen, die mit einer leicht montierbaren Explosionsschutzfritte ausgestattet ist und durch ihr Entgasungssystem nach längerer Betriebsdauer angesammelte Elektrolytfeuchtigkeit wirksam zurückhält.

Die Aufgabe wird erfindungsgemäß durch eine Batterie gelöst, wie sie in Anspruch 1 definiert ist.

Danach liegt ein wesentliches Merkmal der neuen Batterie darin, daß der gemeinsame Gaskanal nicht geradeswegs durch eine Seitenwand des Deckels ins Freie führt, sondern seine Öffnung vielmehr zu einer daneben befindlichen, über einen Seitenkanal erreichbaren Stelle versetzt ist, wo sie in eine voluminöse Vertiefung in der Seitenwand des Deckels einmündet. Diese Vertiefung nimmt ein Einschubteil, welches die den Gaskanal abschließende Fritte enthält, unter gasdichter Verbindung mit dem Deckel auf.

Anhand einiger Figuren wird eine bevorzugte Ausführungsform der Erfindung näher erläutert.

Figur 1 zeigt einen Batteriedeckel in einer Draufsicht.

Figur 2 zeigt den Ausgangsbereich der erfindungsgemäßen Entgasungseinrichtung in einem Ebenen-Schnitt.

Figur 3 zeigt die Vertiefung in der Seitenwand des Deckels mit Einschubteil im Querschnitt.

Figur 4 zeigt die Vertiefung in der Seitenwand des Deckels mit dem Einschubteil perspektivisch.

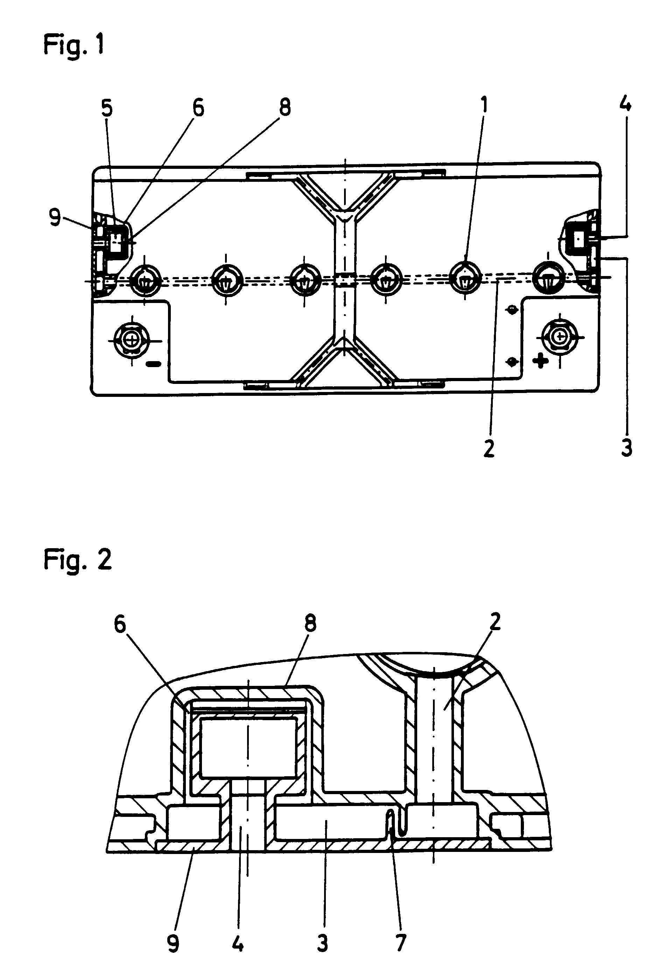

Gemäß Fig.1 verbindet ein mit den Einfüllöffnungen bzw. Batteriestopfen 1 in Linie liegender Gassammelkanal 2, der auch in einer parallel dazu liegenden Linie liegen kann, sämtliche Zellen und mündet an beiden Seitenwänden des Deckels in Seitenkanäle 3, welche die Ladegase den an den Gasabgängen 4 angeordneten Fritten 5 mit den Frittenkammern 6 zuführen.

In dem vergrößerten Ebenen-Schnitt eines der beiden Ausgangsbereiche des Entgasungstrakts nach Fig.2 sind in dem Seitenkanal 3 Prallflächen 7 ersichtlich. Sie haben den Zweck, die Abscheidung von Kondensat und Aerosoltröpfchen, welche durch das Umlenken des Gasstromes beim Übergang vom Gassammelkanal 2 in den Seitenkanal 3 bereits gefördert wird, zusätzlich zu unterstützen.

Vom Seitenkanal gelangen die Ladegase in die seitlich zum Gassammelkanal angeordnete Frittenkammer 6, die einen Teil der Vertiefung 8 in der Seitenwand des Deckels bildet und sich unter der Fritte 5 erstreckt. Diese wird von dem randdicht in die Deckelwandung eingepaßten Einschubteil 9 gehalten.

Dank der seitlichen Anordnung der Vertiefung ist es erfindungsgemäß möglich, ihr Volumen so reichlich zu dimensionieren, daß in die Vertiefung neben der Frittenkammer 6 noch ein Säureauffangbehälter integriert ist, welcher die hier abgeschiedenen Tröpfchen und Feuchtigkeit sammelt.

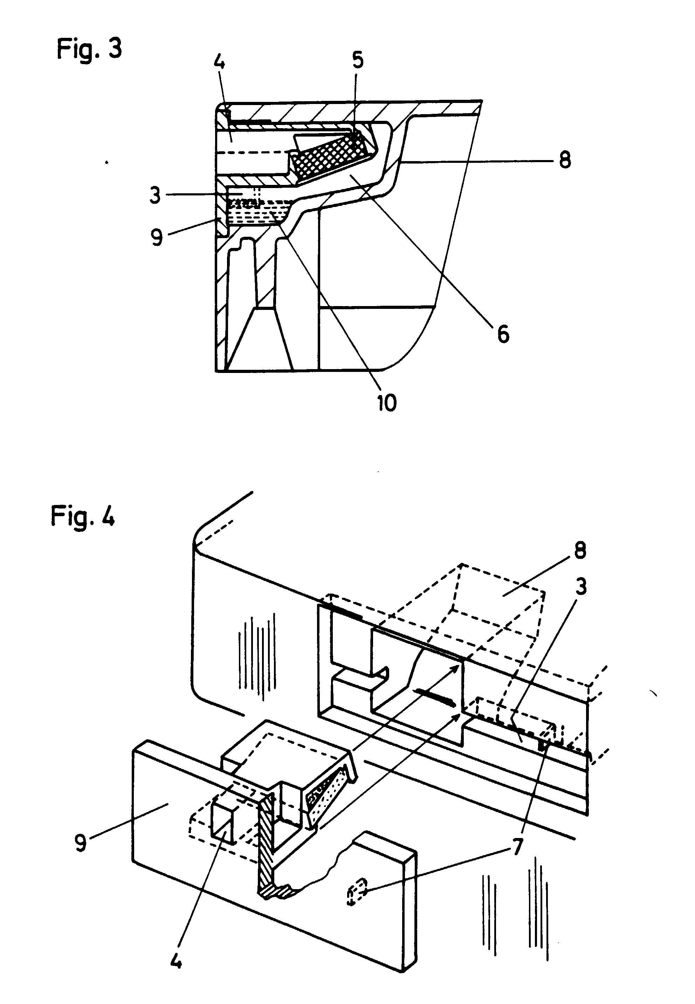

Die Anordnung des Säureauffangbehälters 10 erfolgt dabei so, daß, wie aus Fig.3 ersichtlich, die von unten angeströmte Fritte nicht über der aufgefangenen Flüssigkeit steht. An der Fritte abgeschiedenes Kondensat wird durch eine unterhalb der Fritte angeordnete Fläche, welche ebenso wie die Fritte schräg gestellt ist, in den Sammelbehälter zurückgeführt. Die Neigung der Fritte, bezogen auf die Elektrolytoberfläche, kann zwischen 5° und 85° betragen.

Die mit der seitlichen Anordnung gewonnene Verfügbarkeit an Raum gestattet erfindungsgemäß eine Positionierung der Fritte derart, daß diese aus dem Säuresumpf bzw. aus dem Bereich des Säureauffangbehälters herausgehoben ist. Außerdem ist wegen des seitlich versetzen Gasabgangs die Entgasungsöffnung von den Batteriepolen weiter entfernt (vgl. Fig.1).

Die perspektivische Darstellung der Fig.4 gibt das erfindungsgemäße Einschubteil 9 vor dem Einsetzen in die Vertiefung 8 des Batteriedeckels wieder. Der Seitenkanal 3 bildet in der mit dem Einschubteil korrespondierenden Aussparung der Deckelwand eine Nut, die vom Einschubteil zu einem geschlossenen Kanal vervollständigt wird. Wie leicht zu erkennen, dient der Seitenkanal bei übermäßiger Säureabscheidung zugleich als Überlauf, indem er die Säure aus dem Sammelbehälter in die Batterie zurückführt.

Bei der Herstellung des Batteriedeckels wird zuerst die Fritte randdicht in den Seiten-einschub eingeschweißt. Danach wird das komplette Einschubteil randdicht mit dem Deckel verbunden.

In einer bevorzugten Ausführung der erfindungsgemäßen Batterie ist an beiden Seitenwänden des Deckels eine Vertiefung vorhanden. In diesem Fall läßt sich die eine Vertiefung unter Erweiterung zur Aufnahme eines Einschubteils nutzen, welches neben der Fritte mit einem Sensor zur Erfassung von Zustandsdaten der Batterie ausgestattet ist. Dabei kommen insbesondere Druck- und Temperaturmessungen infrage. Auch Temperatursensoren für die Funktionskontrolle von Rekombinationskatalysatoren können mit Vorteil in dem Einschubteil angeordent sein.

Gegenüber den bekannten Anordnungen bietet die erfindungsgemäße konstruktive Lösung eine Reihe von Vorteilen. So wird, da die Fritte nicht im direkten Gasstrom angeordnet ist, infolge Umleitung der Gase eine erhöhte Trocknung erwirkt und die Fritte weniger benetzt. Die abgeschiedenen Säuretröpfchen werden über Rücklauflächen in einem Säureauffangbehälter, der in die Konstruktion integriert ist, aufgefangen und über diesen in die Batterie zurückgeführt. Durch Orientierung der Fritte im Einschubteil schräg zur Elektrolytoberfläche wird die Frittenunterkante frei von Säure gehalten. Dabei liegt sie stets oberhalb des Säurerücklaufniveaus.

## Patentansprüche

1. Mehrzellige Batterie mit in den Batteriedeckel integrierter Zentralentgasung und dieser nachgeordneter poröser Fritte als Explosionsschutz, dadurch gekennzeichnet, daß der Gassammelkanal (2) in einer die Batteriestopfen verbindenden oder parallel dazu liegenden Linie angeordnet ist und daß seitlich dazu in der Seitenwand des Deckels eine Vertiefung (8) vorgesehen ist, die durch einen Seitenkanal (3) mit dem Sammelkanal (2) in Verbindung steht, und daß in der Vertiefung ein Einschubteil (9) angeordnet ist, welches die den Gaskanal abschließende Fritte (5) enthält und mit dem Deckel gasdicht verbunden ist.

2. Mehrzellige Batterie nach Anspruch 1, dadurch gekennzeichnet, daß die Fritte im Einschubteil schräg, bezogen auf die Elektrolytoberfläche, angeordnet ist und daß unterhalb der Fritte ein Sammelbehälter (10) für an der Fritte abgeschiedenen Elektrolyt vorgesehen ist.

3. Mehrzellige Batterie nach Anspruch 1 oder 2, dadurch gekennzeichnet, daß die Fritte derart angeordnet ist, daß ihr unterer Rand stets oberhalb des Säurerücklaufniveaus liegt.

4. Merzellige Batterie nach einem der Ansprüche 1 bis 3, dadurch gekennzeichnet, daß im Seitenkanal Stege (7) zur Umlenkung des Gasstromes vorgesehen sind.

5. Mehrzellige Batterie nach einem der Ansprüche 1 bis 4, dadurch gekennzeichnet, daß in beiden Seitenwänden des Batteriedeckels eine Vertiefung vorhanden ist.

6. Mehrzellige Batterie nach einem der Ansprüche 1 bis 5, dadurch gekennzeichnet, daß eine der Vertiefungen einen Sensor-Einschub enthält, über den Batteriezustandsdaten erfaßbar sind.

7. Mehrzellige Batterie nach einem der Ansprüche 1 bis 5, dadurch gekennzeichnet, daß eine der Vertiefungen erweitert ist und eine poröse Fritte und einen Sensor enthält.

## Claims

1. A multi-cell battery having a central gas venting means integrated in the battery cover and, downstream of the central gas venting means, a porous frit acting as a protection against explosion, characterized in that the gas collecting duct (2) is arranged in a line connecting the battery plugs or lying parallel thereto, and in that there is provided, laterally thereto in the side wall of the cover, a depression (8) which is connected by a side duct (3) to the collecting duct (2), and in that there is arranged in the depression an insert part (9) which contains the frit (5) closing the gas duct and which is connected to the cover in gas-tight manner.

2. A multi-cell battery according to Claim 1, characterized in that the frit is arranged in the insert part obliquely in relation to the electrolyte surface, and in that a collecting container (10) is provided below the frit for electrolyte deposited at the frit.

3. A multi-cell battery according to Claim 1 or 2, characterized in that the frit is arranged such that its lower edge is always above the level of the acid return flow.

4. A multi-cell battery according to one of Claims 1 to 3, characterized in that webs (7) are provided in the side duct to divert the gas flow.

5. A multi-cell battery according to one of Claims 1 to 4, characterized in that there is a depression in both side walls of the battery cover.

6. A multi-cell battery according to one of Claims 1 to 5, characterized in that one of the depressions contains a sensor insert by means of which data relating to the status of the battery may be detected.

7. A multi-cell battery according to one of Claims 1 to 5, characterized in that one of the depressions is widened and contains a porous frit and a sensor.

## Revendications

1. Batterie multicellulaire à conduite de dégazage central, intégrée dans son couvercle, et en aval de celle-ci une fritte poreuse comme moyen de protection contre l'explosion, caractérisée en ce que le canal collecteur de gaz (2) est aligné sur une ligne passant par les bouchons de batterie ou parallèle à ceux-ci et latéralement, la paroi latérale du couvercle comporte une cavité (8) qui communique avec le canal collecteur (2) par un canal latéral (3) et dans la cavité il y a une pièce encastrée (9) contenant la fritte (5) fermant le canal de gaz et qui est reliée de façon étanche au couvercle.

2. Batterie multicellulaire selon la revendication 1, caractérisée en ce que la fritte est placée en biais dans la pièce à intégrer, par rapport à la surface de l'électrolyte et en ce qu'en dessous de la fritte, il est prévu un réceptacle (10) pour l'électrolyte dégagée par la fritte.

3. Batterie multicellulaire selon la revendication 1 ou 2, caractérisée en ce que la fritte est disposée pour que son bord inférieur se trouve toujours au-dessus du niveau de retour de l'acide.

4. Batterie multicellulaire selon l'une des revendications 1 à 3, caractérisée en ce que le canal latéral comporte des entretoises (7) pour dévier le courant de gaz.

5. Batterie multicellulaire selon l'une des revendications 1 à 4, caractérisée en ce que les deux parois latérales du couvercle de la batterie ont une cavité.

6. Batterie multicellulaire selon l'une des revendications 1 à 5, caractérisée en ce que l'une des cavités comporte un capteur intégré qui détecte les données relatives à l'état de la batterie.

7. Batterie multicellulaire selon l'une des revendications 1 à 5, caractérisée en ce que l'une des cavités est agrandie et contient une fritte poreuse et un capteur.
